# EUROPÄISCHE PATENTSCHRIFT

(11) **EP 1 346 166 B1**
(45) Veröffentlichungstag und Bekanntmachung des Hinweises auf die Patenterteilung: **24.05.2006**
(21) Anmeldenummer: 01272017.3
(22) Anmeldetag: 15.12.2001
(51) Int. Cl.: F16F 13/10

(54) **HYDROFEDER MIT DÄMPFER**
HYDRO SPRING WITH A DAMPER
RESSORT HYDRAULIQUE AVEC AMORTISSEUR

(30) Priorität: 22.12.2000 DE 10064762
(43) Veröffentlichungstag der Anmeldung: 24.09.2003
(73) Patentinhaber: ContiTech Luftfedersysteme GmbH, 30165 Hannover (DE)
(72) Erfinder: GEDENK, Volker, 30966 Hemmingen (DE)
(74) Vertreter: Finger, Karsten
(86) Internationale Anmeldenummer: PCT/EP2001/014847
(87) Internationale Veröffentlichungsnummer: WO 2002/052168

(56) Entgegenhaltungen:
- EP-A- 0 611 216
- DE-A- 3 743 555
- US-A- 4 588 173
- US-A- 4 893 797
- US-A- 5 028 038
- HOLZEMER K.: "Theorie der Gummilager mit hydraulischer Dämpfung" ATZ AUTOMOBILTECHNISCHE ZEITSCHRIFT, Bd. 87, Nr. 10, Oktober 1985 (1985-10), Seiten 545-548,551, XP002195086 Stuttgart, Deutschland

## Beschreibung

Die Erfindung betrifft eine Hydrofeder mit Dämpfer, insbesondere als Primärfeder für den Einsatz in Schienenfahrzeugen, wie sie auch unter der Bezeichnung "hydraulisch dämpfendes elastisches Lager" aus der Patentschrift DE 44 46 800 C1 vorbekannt ist.

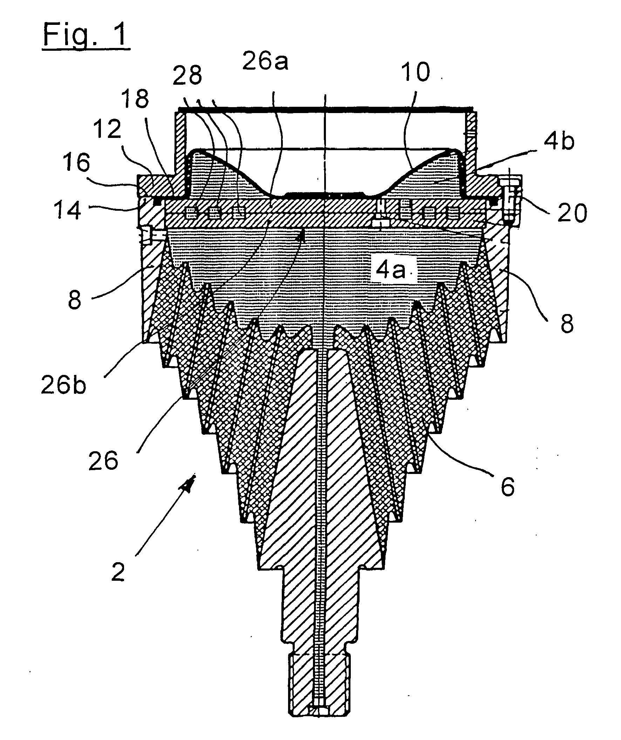

Das in dieser Patentschrift anhand der darin abgebildeten Fig. 1a beschriebene Lager weist "ein Federelement (1) auf, das einerseits mit einem Anschlussteil (11) und andererseits mit einem zylindrischen Gehäuse (3) fest verbunden - insbesondere zusammenvulkanisiert - ist. Auf das Gehäuse (3) ist das gegenseitige Anschlussteil (12) geschraubt, mit dem der becherförmige, Luftausgleichsbohrungen (13.1) aufweisende Lagerdeckel (13) einstückig verbunden ist. Das hydraulische Dämpfungssystem des Lagers besteht aus der Arbeitskammer (6) und der nach außen durch die hochflexible elastische Ausgleichsmembran (2) abgeschlossenen Ausgleichskammer (7) sowie einem in die Trennwand (5) eingeformten Verbindungskanal (4), durch den die eingeschlossene Hydraulikflüssigkeit gedrosselt zwischen den beiden Kammern hin und her strömen kann."
Gemäß diesem stand der Technik weist die innerhalb des elastischen Lagers angeordnete Trennwand (5) einen zylindrischen Rand auf, in den eine schraubenförmige Nut eingelassen ist. In Verbindung mit dem Gehäuse (3) bildet die in den zylindrischen Rand eingelassene Nut einen Kanal (4), der die beiden Hydraulikkammern (6 und 7) miteinander verbindet.
Die Herstellung der in den zylindrischen Rand eingelassenen Nut ist relativ kostenintensiv. wegen seiner axialen Ausdehnung benötigt der zylindrische Rand eine gewisse Bauhöhe, die nicht als Federweg nutzbar ist. Eine Einstellung der Dämpfung auf die jeweils zu federnden Massen ist mit dem vorbekannten verbindungskanal (Dämpfungskanal 4) nicht möglich.

Die Aufgabe der Erfindung besteht darin, die vorbekannte Hydrofeder weiterzuentwickeln. insbesondere soll ein preisgünstiges, eine geringe Bauhöhe erforderndes Dämpferelement für Primärfedern von schienenfahrzeugen geschaffen werden.

Gemäß Anspruch 1 befindet sich ein erfindungsgemäßer Dämpfungskanal in einer einzigen, quer zur Federachse angeordneten Ebene. Daraus resultiert eine sehr geringe Bauhöhe. D. h. wiederum: entweder kann die üblicherweise für Dämpfungskanäle benötigte Bauhöhe für einen erweiterten Federweg verwendet werden oder bei gleichem Federweg kann die Feder insgesamt kleinbauender konstruiert werden.

Die amerikanische Patentschrift US-A-5,028,038 beschreibt ein hydraulisches Motorlager mit Dämpfer, dessen Hydraulikgehäuse ebenfalls einerseits durch ein gummielastisches Federelement und andererseits durch eine hochflexible, elastische Ausgleichsmembran abgeschlossen ist, und das durch eine mindestens einen verbindungskanal aufweisende Trennwand in zwei mit einer Hydraulikflüssigkeit vollständig gefüllte und wechselweise volumenveränderliche Kammern unterteilt ist, wobei die Trennwand eben ausgebildet ist, wobei die Trennwand-Ebene quer zur Federachse orientiert ist, wobei sich der mindestens eine verbindungskanal eben innerhalb der Trennwand erstreckt, und wobei das eine Ende des verbindungskanals in die Arbeitskammer und das andere Ende in die Ausgleichskammer mündet.

Die Schriften US 4,588,173 und DE 37 43 555 A1 und die Automobiltechnische Zeitschrift 87 (1985) s. 545 ff. beschreiben vergleichbare Motorlager.
Keines der beschriebenen Motorlager ist in der Lage, die bei Primärfedern von Schienenfahrzeugen auftretenden extremen Belastungen zu verarbeiten. während die oben erwähnten, im Kfz-Bau verwendeten Motorlager jeweils nur für eine einzige Last ausgelegt sind, müssen die Primärfedern für Schienenfahrzeugen Lastunterschiede vom leeren zum beladenen zustand im Verhältnis von 1 : 4 bis 1 : 5 verarbeiten. Das ist nur möglich, wenn die Tragfeder einen Schichtenaufbau mit einem ganz bestimmten Verhältnis Gummidicke zu Gummihöhe und Anzahl der Gummischichten aufweist. Zusätzlich muss sich auch die dynamische Masse der Flüssigkeit im Drosselkanal vergrößern.
Die hier angeschnittenen Probleme sind bei den oben genannten Motorlagern nicht relevant und deshalb in diesem zusammenhang auch nicht gelöst. Insbesondere ist bei den genannten Motorlagern der wirksame Querschnitt des Kanals bzw. der Kanäle nicht veränderbar.

Bei der erfindungsgemäßen Primärfeder kann durch eine spiralförmige Ausbildung des eben ausgebildeten, Hydraulikflüssigkeit führenden Dämpfungskanals (verbindungskanals) eine hinreichende Strömungslänge realisiert werden, so dass keinerlei Kompromisse bezüglich der Dämpfungswirkung eingegangen werden müssen.

Nicht nur bezüglich der Kanallänge gibt es genügend spielraum. Es können auch mehrere verbindungskanäle konzipiert werden, die zueinander versetzt in der Ebene angeordnet sind, wobei die einzelnen Fließwege miteinander parallelgeschaltet sind. Durch die Aufteilung der Drossel auf mehrere Einzelkanäle können die Kanäle unterschiedlich lang und mit unterschiedlichem Querschnitt ausgeführt werden. Dadurch kann wesentlich breitbandiger gedämpft werden, ohne dass das Dämpfungsmaximum zurückgeht.

Die Verbindungskanäle werden vorzugsweise mit Hilfe von zwei aufeinanderliegende, jeweils mit zueinander orientierte Nuten versehene Scheiben (Drosseloberteil und Drosselunterteil) aufgebaut, die zusammen eine Trennwand bilden.

Darüber hinaus ist auch denkbar, mehrere verbindungskanäle in mehreren Ebenen anzuordnen. Auf diese weise lässt sich eine beliebig große Dämpfungswirkung realisieren.

Wenn die beiden, die hydraulikkanal-bildenden scheiben gegeneinander verdrehbar sind, lässt sich der wirksame Querschnitt variieren. Damit kann man die Dämpfungscharakteristik einstellen.

Schließlich kann durch wahl der Grob- und Feinstruktur der Kanaloberfläche eine weitere Beeinflussung der Dämpfungscharakteristik vorgenommen werden.

Im folgenden wird die erfindungsgemäße Hydrofeder anhand eines Ausführungsbeispiels näher beschrieben.
Fig. 1 zeigt eine erfindungsgemäße Hydrofeder im Längsschnitt.
Fig. 2 zeigt die innerhalb der Hydrofeder angeordnete Trennwand; und zwar zeigt:
Fig. 2a die erfindungsgemäße Trennwand im Längsschnitt;
Fig. 2b das Oberteil der Trennwand (Drosseloberteil), von unten gesehen;
Fig. 2c das Unterteil der Trennwand (Drosselunterteil), von oben gesehen;
Fig. 2d das Oberteil im Längsschnitt; und
Fig. 2e das Unterteil, ebenfalls im Längsschnitt.

Das Hydraulikvolumen 4a, 4b der in Fig. 1 abgebildeten Hydrofeder 2 wird nach "unten" durch ein Federelement 6, das in einen Außenring 8 einvulkanisiert ist, abgeschlossen. Nach "oben" ist das Volumen 4a, 4b durch eine Membrane 10 begrenzt.

Die Membrane 10 ist mittels eines Deckels 12 am Außenring 8 druckdicht befestigt. Zu diesem Zweck weisen sowohl der Außenring 8 als auch der Deckel 12 jeweils eine plane Dichtfläche 14 bzw. 16 auf. Zwischen die planen Dichtflächen 14, 16 erstreckt sich der Außenrand 18 der Membrane 10. Schrauben 20, die den Deckel 12 und den Außenring 8 miteinander verbinden, sorgen für eine druckdichte Befestigung des Deckels 12 an dem Außenring 8.

Zwecks Dämpfung der Federwirkung ist das Hydraulikvolumen 4a, 4b durch eine mit mindestens einem Verbindungskanal 28 versehene Trennwand 26 in zwei Teilvolumen (Arbeitskammer 4a, Ausgleichskammer 4b) unterteilt.

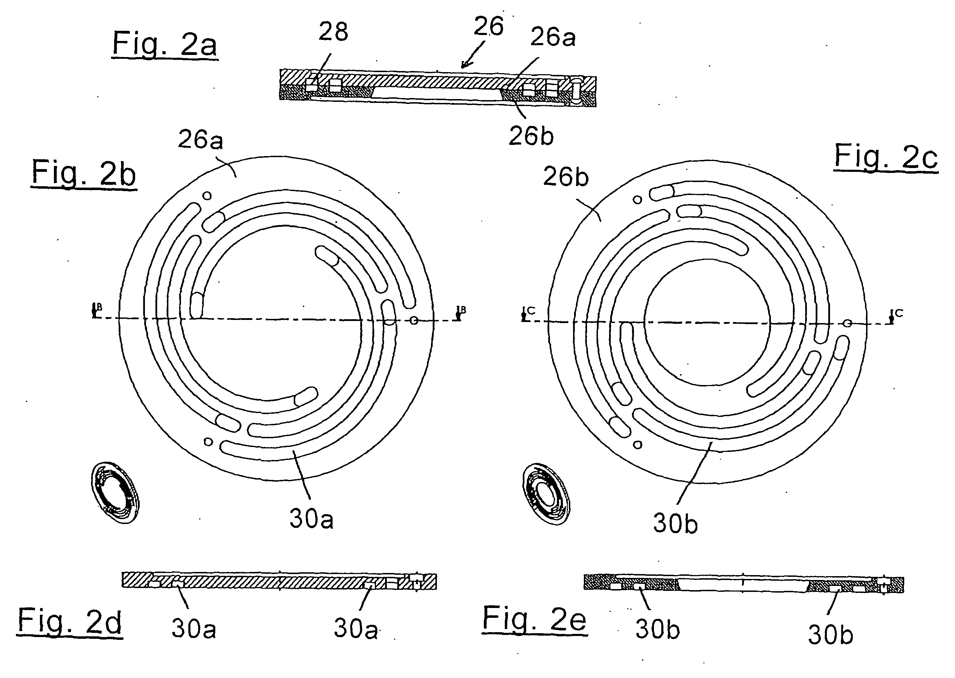

Die Trennwand (Drossel) 26 besteht aus dem Drosselober-26a und dem Drosselunterteil 26b. Beide Teile 26a, 26b sind mit zueinander korrespondierenden spiralförmigen Nuten 30a, 30b (Fig. 2) versehen, die gemeinsam den Verbindungskanal (Ausgleichskanal) 28 bilden, wobei das eine Ende des Ausgleichskanals 28 in die eine Kammer 4a bzw. 4b und das andere Ende des Ausgleichskanals 28 in die andere Kammer 4b bzw. 4a mündet.

Beim Einfederungsvorgang sind die Kammern 4a, 4b wechselweise volumenveränderlich, wobei Hydraulikflüssigkeit durch den Verbindungskanal 28 strömt. Aufgrund der Viskosität der Hydraulikflüssigkeit ergibt sich beim Durchströmen des Verbindungskanals 28 eine mehr oder weniger starke Dämpfung.

In dem dargestellten Ausführungsbeispiel sind Ober- 26a und Unterteil 26b der Trennscheibe 26 gegeneinander verdrehbar, wodurch sich der wirksame Kanalquerschnitt variieren lässt. Außer von der Viskosität hängt die Dämpfungswirkung von der Länge, dem wirksamen Querschnitt und der Oberflächenstruktur des Kanals 28 ab.

### Bezugszeichenliste

- 2: Hydrofeder
- 4a, 4b: Hydraulikvolumen, Volumen, Kammern
- 4a: Arbeitskammer
- 4b: Ausgleichskammer
- 6: Federelement
- 8: Außenring
- 10: Membrane, Ausgleichsmembran
- 12: Deckel, Lagerdeckel
- 14: Dichtfläche des Außenringes
- 16: Dichtfläche des Deckels
- 18: Außenrand der Membrane
- 20: Schraube(n)
- 26: Trennplatte, Trennwand, Drossel
- 26a: Drosseloberteil
- 26b: Drosselunterteil
- 28: Verbindungskanal, Ausgleichskanal, Kanal, Dämpfungskanal
- 30a: Nut im Drosseloberteil
- 30b: Nut im Drosselunterteil

## Patentansprüche

1. Primärfeder eines Schienenfahrzeuges,
- mit einem Hydraulikgehäuse;
- wobei das Hydraulikgehäuse eine Hydraulikkammer (4) umschließt,
- die einerseits durch ein gummielastisches Federelement (6) abgeschlossen ist,
- die andererseits durch eine hochflexible und elastische Ausgleichsmembran (10) abgeschlossen ist;
- wobei die Hydraulikkammer (4) mit Hydraulikflüssigkeit gefüllt und durch eine Trennwand (26) in zwei Teilkammern (4a, 4b), nämlich eine Arbeitskammer (4a) und eine Ausgleichskammer (4b) unterteilt ist;
- wobei die beiden Teilkammern (4a, 4b) wechselweise volumenveränderlich und die Trennwand (26) quer zur Federachse eben ausgebildet ist;
- wobei die beiden Teilkammern (4a, 4b) über mindestens einen Verbindungskanal (28) miteinander verbunden sind,
- wobei das eine Ende des mindestens einen Verbindungskanals (28) in die Arbeitskammer (4a) und das andere Ende in die Ausgleichskammer (4b) mündet;
**dadurch gekennzeichnet,**
- **dass** sich der mindestens Verbindungskanal (28) spiralförmig und eben in der Trennwand (26) erstreckt;
- wobei die Trennwand (26) aus mindestens zwei aufeinanderliegenden Scheiben (Drosseloberteil 26a, Drosselunterteil 26b) besteht,
- wobei die aufeinander angeordneten Scheiben (26a, 26b) drehbar zueinander angeordnet sind, und
- wobei mindestens eine (26a und/oder 26b) der mindestens zwei Scheiben (26a, 26b) eine Nut (30a und/oder 30b) aufweist,
- wobei die mindestens eine Nut (30a und/oder 30b) spiralig ausgebildet ist und im zusammengesetzten Zustand der mindestens zwei Scheiben (26a, 26b) mindestens einen Verbindungskanal (28) bildet.

2. Primärfeder nach dem Oberbegriff des Anspruchs 1,
**dadurch gekennzeichnet,**
- **dass** die Trennwand (26) mehrere, spiralförmig ausgebildete Verbindungskanäle (28) aufweist, die versetzt zueinander angeordnet sind und sich in einer einzigen oder in mehreren Ebenen befinden,
- wobei die Fließwege der mehreren Verbindungskanäle (28) zueinander parallel geschaltet sind.

3. Primärfeder nach Anspruch 1 oder 2,
**dadurch gekennzeichnet,**
- **dass** mindestens zwei aufeinander angeordnete Scheiben (26a, 26b) mit miteinander korrespondierenden Nuten (30a, 30b), die mindestens einen Verbindungskanal (28) bilden, versehen sind,
- wobei der wirksame Querschnitt des Verbindungskanals (28) durch Verdrehen der aufeinander angeordneten Scheiben (26a, 26b) veränderbar ist.

4. Primärfeder nach einem der Ansprüche 1 bis 3,
**dadurch gekennzeichnet,**
**dass** die Innenoberfläche des mindestens einen Verbindungskanals (28) eine Grob und/oder Feinstruktur aufweist.

## Claims

1. Primary spring of a rail vehicle,
- with a hydraulic housing;
- the hydraulic housing enclosing a hydraulic chamber (4),
- which is closed off on one side by a rubber-elastic spring element (6),
- which is closed off on the other side by a highly flexible and elastic compensating membrane (10);
- the hydraulic chamber (4) being filled with hydraulic fluid and subdivided by a dividing wall (26) into two part-chambers (4a, 4b), namely a working chamber (4a) and a compensating chamber (4b);
- the two part-chambers (4a, 4b) being alternately variable in volume and the dividing wall (26) being formed transversely in relation to the spring axis in a planar manner;
- the two part-chambers (4a, 4b) being connected to each other by means of at least one connecting channel (28),
- one end of the at least one connecting channel (28) opening out into the working chamber (4a) and the other end opening out into the compensating chamber (4b);
**characterized**
- **in that** the at least one connecting channel (28) extends in a spiral and planar manner in the dividing wall (26);
- the dividing wall (26) comprising at least two discs lying one on top of the other (upper restrictor part 26a, lower restrictor part 26b),
- the discs (26a, 26b) lying one on top of the other being arranged rotatably in relation to one another, and
- at least one (26a and/or 26b) of the at least two discs (26a, 26b) having a groove (30a and/or 30b),
- the at least one groove (30a and/or 30b) being spirally formed and forming in the assembled state of the at least two discs (26a, 26b) at least one connecting channel (28).

2. Primary spring according to the precharacterizing clause of Claim 1, **characterized**
- **in that** the dividing wall (26) has a number of spirally formed connecting channels (28), which are arranged offset in relation to one another and are located in a single plane or in a number of planes,
- the flow paths of the number of connecting channels (28) being arranged parallel to one another.

3. Primary spring according to Claim 1 or 2, **characterized**
- **in that** at least two discs (26a, 26b) arranged one on top of the other are provided with grooves (30a, 30b) corresponding to one another, which form at least one connecting channel (28),
- the effective cross section of the connecting channel (28) being variable by turning the discs (26a, 26b) arranged one on top of the other.

4. Primary spring according to one of Claims 1 to 3, **characterized in that** the inner surface of the at least one connecting channel (28) has a coarse and/or fine structure.

## Revendications

1. Ressort primaire pour véhicule ferroviaire, qui présente:
- un boîtier hydraulique,
- le boîtier hydraulique enfermant une chambre hydraulique (4),
- qui est fermée d'un côté par un élément élastique (6) en caoutchouc et
- qui est fermée de l'autre côté par une membrane d'équilibrage (10) élastique et très flexible,
- la chambre hydraulique (4) étant remplie de liquide hydraulique et étant divisée par une paroi de séparation (26) en deux chambres partielles (4a, 4b), à savoir une chambre de travail (4a) et une chambre d'équilibrage (4b),
- les deux chambres partielles (4a, 4b) pouvant changer de volume en alternance, la paroi de séparation (26) étant plane et transversale par rapport à l'axe du ressort,
- les deux chambres partielles (4a, 4b) étant reliées l'une à l'autre par au moins un canal de liaison (28),
- l'un des extrémités du ou des canaux de liaison (28) débouchant dans la chambre de travail (4a) et son autre extrémité dans la chambre d'équilibrage (4b),
**caractérisé en ce que**
- le ou les canaux de liaison (28) s'étendent en spirale plane dans la paroi de séparation (26),
- la paroi de séparation (26) est constituée d'au moins deux plaques superposées (pièce supérieure d'étranglement 26a, pièce inférieure d'étranglement 26b),
- les plaques (26a, 26b) superposées l'une à l'autre sont disposées à rotation mutuelle,
- au moins une (26a et/ou 26b) des deux ou plusieurs plaques (26a, 26b) présente une rainure (30a et/ou 30b) et
- la ou les rainures (30a et/ou 30b) ont une configuration en spirale et forment au moins un canal de liaison (28) lorsque les deux ou plusieurs plaques (26a, 26b) sont assemblées.

2. Ressort primaire selon le préambule de la revendication 1, **caractérisé en ce que** la paroi de séparation (26) présente plusieurs canaux de liaison (28) en spirale qui sont décalés les uns par rapport aux autres et sont situés dans un seul plan ou dans plusieurs plans, les parcours d'écoulement des différents canaux de liaison (28) étant raccordés en parallèle les uns aux autres.

3. Ressort primaire selon les revendications 1 ou 2, **caractérisé en ce qu'**au moins deux plaques (26a, 26b) disposées l'une au-dessus de l'autre sont dotées de rainures (30a, 30b) respectives qui forment au moins un canal de liaison (28), la section transversale efficace du canal de liaison (28) pouvant être modifiée par rotation des plaques (26a, 26b) disposées les unes au-dessus des autres.

4. Ressort primaire selon l'une des revendications 1 à 3, **caractérisé en ce que** la surface intérieure du ou des canaux de liaison (28) présente une structuration grossière et/ou une structuration fine.
